# EUROPEAN PATENT SPECIFICATION

(11) **EP 2 953 374 B1**
(45) Date of publication and mention of the grant of the patent: **28.07.2021**
(21) Application number: 14170765.3
(22) Date of filing: 02.06.2014
(51) Int. Cl.: H04N 21/81, H04N 21/233, H04N 21/439, H04N 21/462, H04N 21/478, H04N 21/8545

(54) **Control of a computer program**
Steuerung eines Computerprogramms
Commande d'un programme informatique

(43) Date of publication of application: 09.12.2015
(73) Proprietor: Rovio Entertainment Ltd, 02150 Espoo (FI)
(72) Inventor: Diflora, Cristiano, 02150 Espoo (FI)
(74) Representative: Boco IP Oy Ab

(56) References cited:
- EP-A2- 2 575 128
- US-A1- 2007 021 058
- US-A1- 2012 216 226
- US-A1- 2013 152 139
- US-A1- 2014 004 934
- US-B1- 8 254 308
- Anonymous: "Main/Unlockable Content - Television Tropes & Idioms", , 30 October 2013 (2013-10-30), XP055130344, Retrieved from the Internet: URL:http://web.archive.org/web/20131030173 809/http://tvtropes.org/pmwiki/pmwiki.php/ Main/UnlockableContent [retrieved on 2014-07-18]

## Description

### FIELD OF INVENTION

The present invention pertains to the field of controlling computer program execution.

### BACKGROUND OF INVENTION

Media content may be used in various ways. When jogging, a consumer may listen to music from a portable radio or media player. When at home or in a transportation vehicle, a consumer may watch video content played on a screen and in a cinema, consumers may see movies in exchange for an entrance fee. When at work, a supervisor may listen to music while overseeing an industrial process.

Content, such as for example media, may be used on mobile devices as well. Such mobiles may comprise tablets or smartphones, for example. Content may be streamed or pre-loaded into mobile devices for consumption on the go. Pre-loaded content is useful for consumption where connectivity is limited, such as for example on board aircraft. Pre-loaded or streamed content may be subject to a charge when such content is the subject of copyrights.

Mobile or non-mobile devices may run software engineered to control industrial processes, such as for example chemical plants, nuclear power stations or manufacturing facilities. For example, such software may control industrial robots to assemble cars from parts, wherein each car may be advanced along a manufacturing line such that a car assembly process may be implemented stage by stage in order.

Controlling the execution of software may be accomplished in various ways. For example, a user interface may be provided to enable a user to cause the software to be executed in a way that is suitable for the prevailing situation. User interfaces may comprise buttons, touch-screen interfaces, voice commands, keyboards and computer mice used to input instructions to a computer running the software.

Software execution may be at least in part controlled remotely. Software may be associated with licenses, such that the software may only be usable when a license to the software is in existence and valid. The software may be configured to verify the validity of a license in connection with starting up the software.

Another way to affect software remotely is provision of updates to the software. Updating may involve, for example, providing updated virus definitions to an antivirus software, or providing a new version of a web browser.

US patent application publication 20130152139 discloses a second screen application that sense a television program being watched by a user, and present menus of complementary content on the phone touchscreen from which the user can select.

US patent application publication 20070021058 discloses a handheld electronic device for use at a venue hosting a live sporting event. The device may be unlocked during a live event based on an identifier received over RF transmission.

Further relevant prior art is discloses in US20014/004934.

### SUMMARY OF THE INVENTION

The invention is defined in the appended claims.

Embodiments that do not fall within the scope of the claims do not form part of the invention but represent background art that is useful for understanding the invention.

### Industrial Applicability

At least some embodiments of the present invention find industrial application in control of industrial or other processes, for example to enhance the safety of industrial sites.

### BRIEF DESCRIPTION OF THE DRAWINGS

FIGURE 1 illustrates a first example system capable of supporting at least some embodiments of the invention;
FIGURE 2 illustrates a second example system capable of supporting at least some embodiments of the invention;
FIGURE 3 illustrates an example apparatus capable of supporting at least some embodiments of the present invention;
FIGURE 4 is a graph of an example embodiment of the invention;
FIGURE 5 is a first flow graph of a first method in accordance with at least some embodiments of the present invention, and
FIGURE 6 is a second flow graph of a second method in accordance with at least some embodiments of the present invention.

### DETAILED DESCRIPTION OF EXAMPLE EMBODIMENTS

Enabling a second screen experience where content present in a background affects performance of a computer program allows controlling the execution of the computer program, at least in part, using control information that may be live or played from a recording. Benefits may include preventing user interactions with a computer program that could be dangerous. The control information may be non-specific to a content in which it is embedded, which may be beneficial at least since it removes a need to build a large database of possible contents.

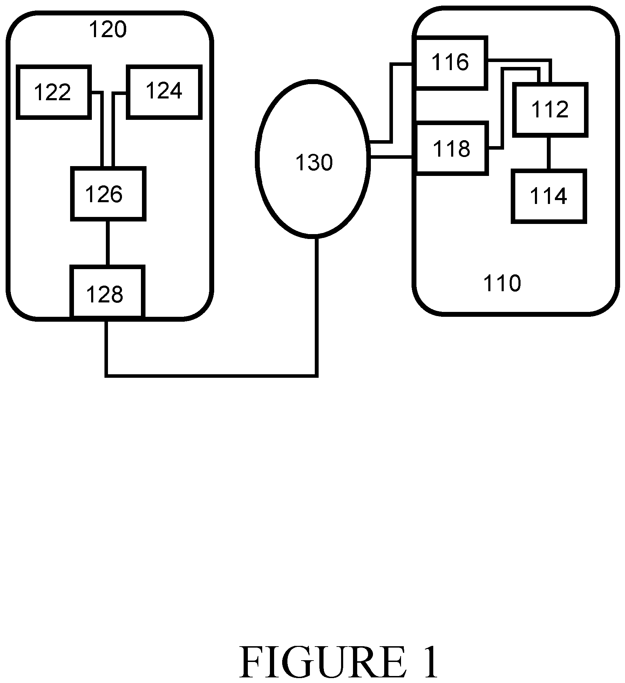

FIGURE 1 illustrates a first example system capable of supporting at least some embodiments of the invention. FIGURE 1 illustrates a user device 110, which may comprise, for example, a mobile device such as a smartphone, phablet or tablet device, or alternatively a non-mobile device such as a desktop computer or smart refrigerator. User device 110 is illustrated as comprising a microphone 116, which may operate in accordance with normal microphone principles, and a data interface 118. Data interface 118 may comprise, for example, a line-in interface, a high-definition multimedia interface, HDMI, interface, an Ethernet interface, a Bluetooth interface, an infrared interface or another type or wired or wireless interface capable of communicating data.

User device 110 is further illustrated in FIGURE 1 as comprising a decoder 112, which may comprise a subliminal audio decoder, for example. Decoder 112 may be implemented as a hardware component or at least in part as a software routine configured to run on at least one processing core comprised in user device 110. Decoder 112 may be implemented in whole as the software routine. Decoder 112 may be configured to detect control information embedded in an audio content signal. Decoder 112 may be configured to, at least in part, receive the audio content signal from microphone 116 as a digital representation of an analog audio signal that microphone 116 has recorded. Decoder 112 may be configured to, at least in part, receive a data stream, for example directly or indirectly from data interface 118, and to determine presence of control information embedded in the data stream. In other words, an audio content signal may comprise a recorded digital representation of an analog audio signal, or an audio content signal may comprise an encoded digital audio content signal, received via data interface 118. The encoded digital audio content signal may be embedded in an encoded audiovisual content.

User device 110 is further illustrated in FIGURE 1 as comprising a program manager 114, which may comprise, for example, a processor or a software routine configured to run on at least one processing core comprised in user device 110. In some embodiments, decoder 112 and program manager 114 are software routines configured to run on the same processing core, or at least in part on different processing cores, comprised in user device 110. Program manager 114 may be configured to modify execution of a computer program running in user device 110, for example based at least in part on control information received via microphone 116 or data interface 118.

In addition to user device 110, FIGURE 1 illustrates a content provider 120. Systems configured to operate in accordance with the present invention may comprise more than one content provider and more than one user device, although for the sake of clarity only one content provider 120 and one user device 110 are illustrated in FIGURE 1.

Content provider 120 may comprise a television channel, a streaming-video source, a radio channel or another content or media source. The content provider 120 of FIGURE 1 comprises a content source 122, which may be arranged to produce a content signal, such as for example an audio, video or audiovisual content signal. Program asset store 124 may store information relating to controlling execution of a computer program. For example, program asset store 124 may store control information that may be inserted in a content signal, such as for example an audio content signal, to affect execution of a computer program. Program asset store 124 may store control information relating to controlling execution of more than one computer program.

Content provider 120 of FIGURE 1 further comprises a program asset injector 126. Program asset injector 126 may be configured to receive a content signal from content source 122 and control information from program asset store 124. Program asset injector 126 may then modify the content signal with the control information to produce a modified content signal, wherein the modified content signal comprises embedded therein the control information in a suitable encoded format. For example, the control information may be encoded into an audio signal so that the presence of the control information in the audio signal is difficult or impossible for the human ear to detect when the audio signal is listened to. The control information may be so encoded, for example, by arranging the control information as a combination of frequency characteristics that the human ear is not adept in detecting, but which can be readily detected by numerically analysing frequency characteristics of the audio signal. The encoding may comprise error correction coding, such as for example redundancy bits.

Content provider 120 of FIGURE 1 further comprises transmitter 128 configured to transmit the modified content signal, via a suitable connection, to distribution network 130. Distribution network 130 may comprise a television distribution network, a wire-line network or another kind of network.

In some embodiments, content provider 120 is an on-site system inside an industrial compound. In these cases, content source 122 may be remote and, unlike in FIGURE 1, not comprised in content provider 120. In this case, the industrial compound may distribute into an on-site network a content signal received from content source 122 and modified by program asset store 124 and program asset injector 126 on the site.

In some embodiments, content provider 120 comprises a television program distribution system. In these cases, by program asset store 124 and program asset injector 126 may be used to modify a content signal to comprise control information configured to affect the execution of computer programs in consumer devices.

In general, the audio content signal, excluding the control information embedded therein, may be at least one of unrelated to the computer program, not comprised in the computer program, not caused by the computer program and independent of the computer program.

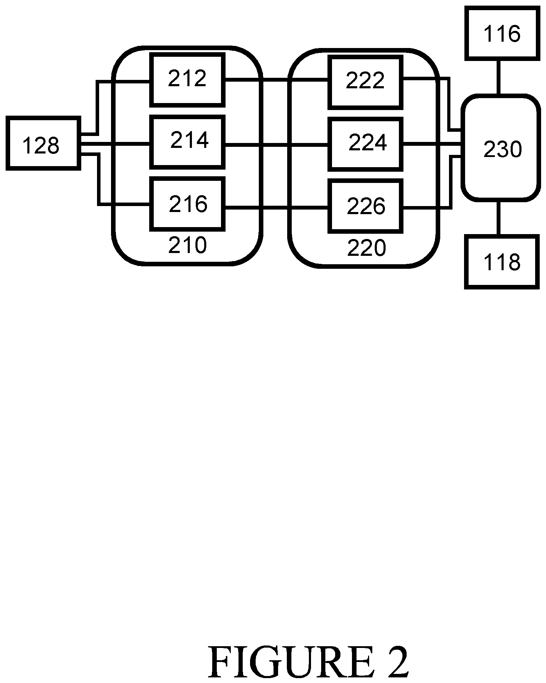

FIGURE 2 illustrates a second example system capable of supporting at least some embodiments of the invention. Elements 116, 118 and 128 correspond to microphone 116, data interface 118 and transmitter 128, as in FIGURE 1.

FIGURE 2 gives further detail on some examples of what network 130 of FIGURE 1 may comprise. In FIGURE 2 is illustrated content delivery system 210, which may comprises pre-recorded media 212, such as digital versatile discs, DVD, or compact discs, CD. Additionally or alternatively to pre-recorded media the content delivery system may comprise video broadcasting 214. Video broadcasting may comprise at least one digital video broadcasting, DVB, stream. DVB comes in different versions such as terrestrial, satellite, cable, handheld and satellites-to-handhelds. Alternatively video broadcasting may comprise an analogue broadcast signal. Additionally or alternatively to pre-recorded media and/or video broadcasting the content delivery system may comprise data stream 216, which may comprise, for example, a hypertext transfer protocol, HTTP, stream. HTTP also comes in a secure version, HTTPS. Other streaming formats are also possible.

Additionally to content delivery system 210, in FIGURE 2 there is also illustrated a user equipment 220. The user equipment may comprise at least one of a player of pre-recorded media 222, a broadcast receiver 224 and a computer 226. The player of pre-recorded media may accept pre-recorded media 212. The broadcast receiver 224 may receive video broadcasting 214. Computer 226 may receive data stream 216.

FIGURE 2 also comprises a media player device 230, such as for example a television. Media player device 230 may be arranged to accept input from player of pre-recorded media 222, broadcast receiver 224 and/or computer 226. In the case of computer 226, the media player device may comprise, for example, a laptop screen and laptop speakers comprised in the computer 226 or separate from computer 226.

In at least some embodiments, only one content delivery method is needed to practice the invention. In other words, content may be delivered by pre-recorded media 212 which is played in player of pre-recorded media 222. Alternatively, content may be broadcast or streamed. Content maybe broadcast or streamed, and recorded for future playback. Thus broadcasted or streamed content may become pre-recorded content when recorded by, for example, a consumer in a set-top box. In case of pre-recorded media, transmitter 128 may be seen as a factory where pre-recorded media is produced, and the actual recordings, for example DVD discs, are then transmitted by shipping them into a distribution channel. By embedding the control information in the content, it may be achieved that the control information is synchronous to the experience of seeing and/or hearing the content, regardless of whether the content is delivered as a broadcast, stream or a recording. When broadcasting or streaming content, different receivers may receive the content at different times due to network propagation delay differences. Thus using a predefined timing scheme may be seen as inferior to embedding control information in the content itself.

Modifying execution of a computer program in user device 110 may be desirable for a number of reasons. For example, where user device 110 runs a control program adapted to allow a user to control aspects of a chemical process at an industrial facility, the control program may advantageously be affected to modify a user interface dynamically during execution. For example, where a chemical process is in a phase where increasing its temperature above a certain threshold would cause the process to become unstable, the control program may be caused to display a warning in case the user attempts to modify the temperature so that it would exceed the threshold. Alternatively, increasing the temperature above the threshold may be disabled for the duration of the phase where it could be dangerous. As another example, where a process step is only safe in a certain phase, it may be caused to become available in the control program during this phase and not during other phases. In general, a set of available functionalities in the computer program may be modified. In other examples, functionalities may be enabled in case the industrial process is in a stage where such functionalities are appropriate.

The execution of the computer program may be modified by introducing control information into a content broadcast or stream in the industrial facility. User device 110 may them pick up the control information, for example from an audio part of the broadcasted or streamed content, and modify the execution of the computer program accordingly. Where the content is recorded, the recorded content may comprise control information where the content is designed to be played when the industrial process is run through a defined set of phases, for example. In this case, the control information may affect the execution of the computer program accordingly to enable correct use of the computer program and prevent potentially dangerous errors. For example, functionalities such as user interface elements may be disabled or enabled in accordance with the control information.

Another example of a case where affecting execution of a computer program in user device 110 may be desirable is a game. Where user device 110 runs a game and the user simultaneously watches a television program, the game experience may be enhanced by providing a modified game experience based on control information user device 110 gleans from the television program, for example from information encoded in an audio part of the television broadcast, via microphone 116. As described above, the information may be encoded therein in a way that is inaudible, or nearly so, to humans. Such encoding may employ frequency elements, audio fingerprinting techniques or steganography, for example. In at least some embodiments, a bit rate of the control information need not be very high.

As a first example, in case the user plays a car racing game in his home, the car racing game may be configured to react to control information embedded in an automobile commercial on the television. At least one the following may then occur: 1) the logo of the advertising automobile manufacturer may be displayed on-screen in the car game, 2) the user may receive a bonus fill-up to his petrol tank in-game, and 3) an extra level may be revealed for the user to play.

As a second example, where the user plays a game manufactured by a game manufacturer, such as for example Rovio Entertainment of Espoo, Finland. Responsive to gleaning control information from a television program where the game manufacturer, the game or other games of the game manufacturer is featured, extra features of the game may be enabled in the game. A logo of the game manufacturer may additionally or alternatively be displayed, or caused to be displayed.

As a third example, a game experience may be enhanced where a pre-recorded motion picture has product placements. When the products are on-screen, control information may be emitted, for example embedded in the audio content of the motion picture. Such control information may unlock in the game products similar to those visible in the motion picture. Receiving information at the same, or nearly the same, time from two sources enhances the perceptibility of the information and may delight the user.

The control information may be specific to the computer program, to a manufacturer of the computer program, to a type of the computer program, and/or to a set of computer programs wherein the computer program is comprised. To achieve this, the control information may comprise at least one of an identifier of the computer program, an identifier of a manufacturer of the computer program, an identifier of a type of the computer program and an identifier associated with a set of computer programs, the computer program being comprised in the set of computer programs. In general, determining the control information conforms to a criterion defined by the computer program may comprise determining whether the computer program stores or is associated with such an identifier.

Where the control information is specific to the computer program, type of computer program, set of computer programs or manufacturer of computer program, a benefit is obtained wherein the control information needn't be specific to the content the control information is embedded in. For example where the content is played from a stored source, user device 110 needn't have access to any database of contents to determine whether it should react to the control information by modifying the execution of the computer program. Rather, user device 110 need only know which programs it is running, and optionally the type, manufacturer and/or set of at least one of the programs.

In some embodiments, user device 110 may be configured to both run the computer program and to play the content the control information is embedded in. In these cases, user device 110 may determine presence of the control information via microphone 116, or directly from a data file or data stream carrying the content. When the control information is determined directly from the data file or data stream, the audio may be played without the control information. A first example of this kind of embodiment is where a user uses a tablet computer to run an industrial process through a startup procedure. A sound file on the tablet computer may comprise verbal instructions and warnings to guide the user, the sound file also comprising control information to synchronously enable and/or disable features of the computer program the user uses to control the startup procedure. Alternatively, such sound file may be streamed to the tablet computer, for example via data interface 118. For example, a certain user interface option may only be available in connection with a verbal warning from the audio file, to increase process safety. A second example is where a user uses a smartphone to play a game, while listening to music stored on the smartphone in mp3 format or received streamed in digital format via data interface 118. Features in the game may be modified in response to control information in the mp3 files or in the incoming data stream.

In some embodiments, user device 110 may comprise or be enabled to interface to an accessory device, which may comprise, for example, a microphone unit capable of determining presence of control information. Such an accessory may be useful in case microphone 116 of user device 110 is unable to discern the control information, which may be encoded in a way that makes it inaudible to a human ear. In case microphone 116 is designed to mimic the capabilities of the human ear, it may be unable to pick up the control information and an accessory microphone may be needed to determine the presence and contents of the control information.

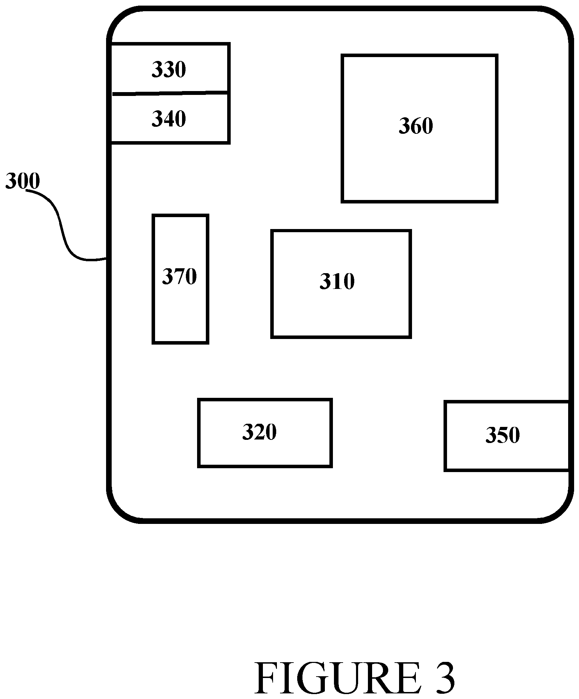

FIGURE 3 illustrates an example apparatus capable of supporting at least some embodiments of the present invention. Illustrated is device 300, which may comprise, for example, a user device 110 of FIGURE 1. Comprised in device 300 is processor 310, which may comprise, for example, a single- or multi-core processor wherein a single-core processor comprises one processing core and a multi-core processor comprises more than one processing core. Processor 310 may comprise a Qualcomm Snapdragon 800 processor, for example. Processor 310 may comprise more than one processor. A processing core may comprise, for example, a Cortex-A8 processing core manufactured by Intel Corporation or a Brisbane processing core produced by Advanced Micro Devices Corporation. Processor 310 may comprise at least one application-specific integrated circuit, ASIC. Processor 310 may comprise at least one field-programmable gate array, FPGA. Processor 310 may be means for performing method steps in device 300. Processor 310 may be means for performing method steps in device 300. Processor 310 may be configured, at least in part by computer instructions, to perform actions.

Device 300 may comprise memory 320. Memory 320 may comprise random-access memory and/or permanent memory. Memory 320 may comprise at least one RAM chip. Memory 320 may comprise magnetic, optical and/or holographic memory, for example. Memory 320 may be at least in part accessible to processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions.

Device 300 may comprise a transmitter 330. Device 300 may comprise a receiver 340. Transmitter 330 and receiver 340 may be configured to transmit and receive, respectively, information in accordance with at least one cellular or non-cellular standard. Transmitter 330 may comprise more than one transmitter. Receiver 340 may comprise more than one receiver. Transmitter 330 and/or receiver 340 may be configured to operate in accordance with global system for mobile communication, GSM, wideband code division multiple access, WCDMA, long term evolution, LTE, IS-95, wireless local area network, WLAN, Ethernet and/or worldwide interoperability for microwave access, WiMAX, standards, for example. Transmitter 330 and/or receiver 340 may comprise data interface 118, for example.

Device 300 may comprise a near-field communication, NFC, transceiver 350. NFC transceiver 350 may support at least one NFC technology, such as NFC, Bluetooth, Wibree or similar technologies.

Device 300 may comprise user interface, UI, 360. UI 360 may comprise at least one of a display, a keyboard, a touchscreen, a vibrator arranged to signal to a user by causing device 300 to vibrate, a speaker and a microphone, such as microphone 116 of FIGURE 1. A user may be able to operate device 300 via UI 360, for example to accept incoming telephone calls, to originate telephone calls or video calls, to browse the Internet, to manage digital files stored in memory 320 or on a cloud accessible via transmitter 330 and receiver 340, or via NFC transceiver 350, and/or to play games.

Device 300 may comprise or be arranged to accept a user identity module 370. User identity module 370 may comprise, for example, a subscriber identity module, SIM, card installable in device 300. A user identity module 370 may comprise information identifying a subscription of a user of device 300. A user identity module 370 may comprise cryptographic information usable to verify the identity of a user of device 300 and/or to facilitate encryption of communicated information and billing of the user of device 300 for communication effected via device 300.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver.

Device 300 may comprise further devices not illustrated in FIGURE 3. For example, where device 300 comprises a smartphone, it may comprise at least one digital camera. Some devices 300 may comprise a back-facing camera and a front-facing camera, wherein the back-facing camera may be intended for digital photography and the front-facing camera for video telephony. Device 300 may comprise a fingerprint sensor arranged to authenticate, at least in part, a user of device 300. In some embodiments, device 300 lacks at least one device described above. For example, some devices 300 may lack a NFC transceiver 350 and/or user identity module 370.

Processor 310, memory 320, transmitter 330, receiver 340, NFC transceiver 350, UI 360 and/or user identity module 370 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the present invention.

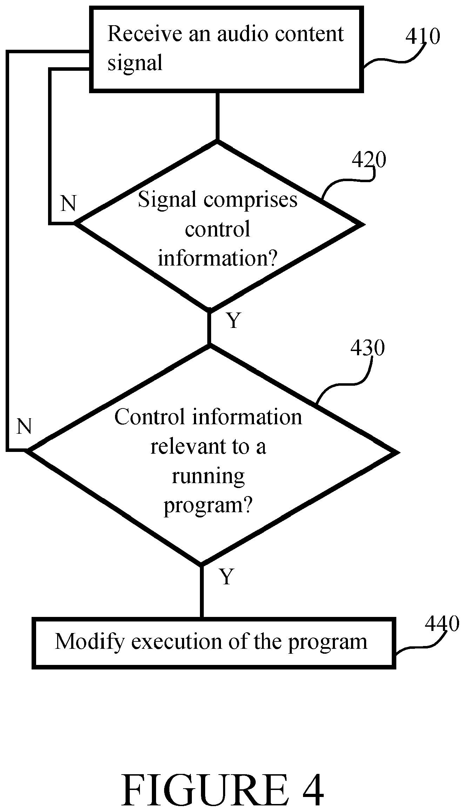

FIGURE 4 is a graph of an example embodiment of the invention. Phase 410 of FIGURE 4 comprises receiving an audio content signal, for example via a microphone or data interface comprised in an apparatus performing the phases of the illustrated method. From phase 410 processing advances to phase 420, wherein it is determined, if the received audio content signal comprises control information, for example encoded suitably in the audio content signal.

In case it is determined in phase 420 that control information is comprised in the received audio content signal, processing advances from phase 420 to phase 430. Otherwise, processing returns from phase 420 back to phase 410.

In phase 430, it is determined whether the control information relates to a program that is being run. In case it is determined in phase 430 that the control information relates to a program that is being run, processing advances from phase 430 to phase 440. Otherwise, processing returns from phase 430 back to phase 410.

In phase 440, execution of the program the control information relates to is modified, at least in part based on and/or responsive to the control information.

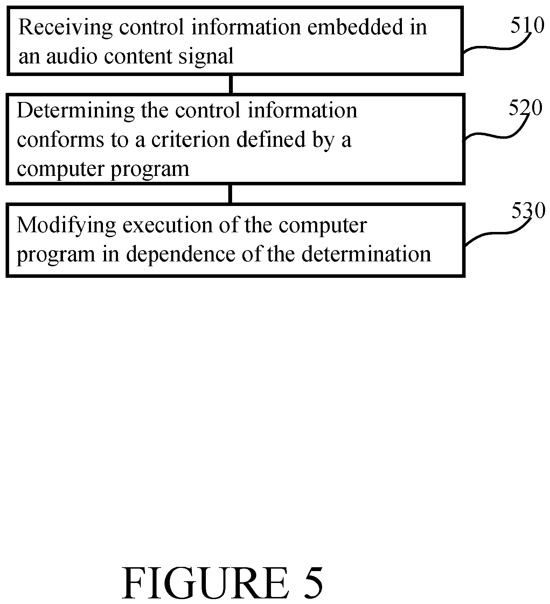

FIGURE 5 is a first flow graph of a first method in accordance with at least some embodiments of the present invention. The phases of the illustrated method may be performed in user device 110, for example. Phase 510 comprises receiving control information embedded in an audio content signal. Phase 520 comprises determining the control information conforms to a criterion defined by a computer program. Finally, phase 530 comprises modifying execution of the computer program at least in part in dependence of the determination.

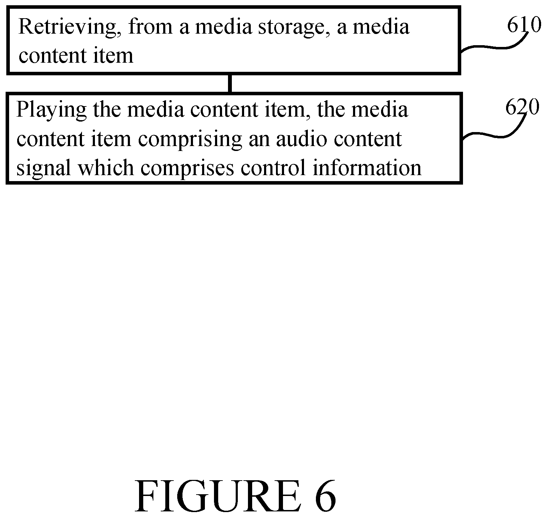

FIGURE 6 is a second flow graph of a second method in accordance with at least some embodiments of the present invention. The phases of the illustrated method may be performed in player of pre-recorded media 222, for example. Phase 610 comprises retrieving, from a media storage, a media content item. Phase 620 comprises playing the media content item, the media content item comprising an audio content signal which comprises, embedded therein, control information.

It is to be understood that the embodiments of the invention disclosed are not limited to the particular structures, process steps, or materials disclosed herein. It should be understood that terminology employed herein is used for the purpose of describing particular embodiments only and is not intended to be limiting.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. In addition, various embodiments and example of the present invention may be referred to herein along with alternatives for the various components thereof.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty. Accordingly, it is not intended that the invention be limited, except as by the claims set forth below.

## Claims

1. An apparatus comprising:
means for running a computer program that is a game;
means for receiving, simultaneously with running the computer program, control information embedded in an audio content signal encoded using frequency elements, audio fingerprinting techniques or steganography causing the encoded control information to be essentially inaudible to humans;
means for determining whether the control information conforms to a criterion defined by the computer program running in the apparatus, wherein said determining comprises determining whether the computer program stores or is associated with the identifier, and
means for modifying execution of the computer program in dependence of the determination, wherein said modifying comprises modifying a set of available functionalities in the computer program,
**characterized in that** said control information comprising at least one of an identifier of the computer program, an identifier of a manufacturer of the computer program, an identifier of a type of the computer program and an identifier associated with a set of computer programs, the computer program being comprised in the set of computer programs.

2. A method, comprising:
running a computer program that is a game;
simultaneously with running the computer program, receiving control information embedded in an audio content signal encoded using frequency elements, audio fingerprinting techniques or steganography causing the encoded control information to be essentially inaudible to humans,;
determining whether the control information conforms to a criterion defined by the computer program running in the apparatus, wherein the determining comprises determining whether the computer program stores or is associated with the identifier, and
modifying execution of the computer program at least in part in dependence of the determination, wherein said modifying comprises modifying a set of available functionalities in the computer program,
**characterized in that**:
said control information comprises at least one of an identifier of the computer program, an identifier of a manufacturer of the computer program, an identifier of a type of the computer program and an identifier associated with a set of computer programs, the computer program being comprised in the set of computer programs.

3. The method of claim 2, wherein the control information does not identify a media content item the audio content signal is comprised in.

4. The method of claim 2, wherein modifying the set of available functionalities in the computer program comprises at least one of adding and removing menu options from a user interface of the computer program.

5. The method of claim 2, wherein modifying the set of available functionalities in the computer program comprises at least one of enabling and disabling features of the computer program.

6. The method of claim 2, wherein modifying the set of available functionalities in the computer program comprises at least one of allowing access to a bonus level, allowing use of a bonus item, recharging a player entity in the game and allowing use of a bonus vehicle.

7. The method according to any of claims 2-6, wherein determining the control information conforms to a criterion defined by the computer program comprises verifying the control information comprises a valid cryptographic token.

8. The method according to claim 7, wherein the cryptographic token comprises a cryptographic signature.

9. A computer program comprising instructions which, when executed by a computer, cause the computer to carry out a method in accordance with any one of claims 2 - 8.

## Patentansprüche

1. Vorrichtung umfassend:
ein Mittel zum Ausführen eines Computerprogramms, bei dem es sich um ein Spiel handelt;
ein Mittel, um bei Ausführung des Computerprogramms gleichzeitig in einem Audio-Content-Signal eingebettete Steuerinformationen zu empfangen, die mit Hilfe von Frequenzelementen, Audio-Fingerabdruck-Techniken oder Steganographie kodiert sind, welche bewirken, dass die kodierten Steuerinformationen für Menschen im Wesentlichen unhörbar sind;
ein Mittel zum Bestimmen, ob die Steuerinformationen mit einem Kriterium übereinstimmen, das durch das in der Vorrichtung laufende Computerprogramm definiert wird, wobei dieses Bestimmen umfasst, dass bestimmt wird, ob das Computerprogramm den Bezeichner speichert oder mit dem Bezeichner verknüpft ist, und
ein Mittel zur Modifizierung der Ausführung des Computerprogramms in Abhängigkeit von der Bestimmung, wobei die Modifizierung umfasst, dass ein Satz verfügbarer Funktionalitäten im Computerprogramm modifiziert wird,
**dadurch gekennzeichnet, dass** die Steuerinformationen mindestens eines von Folgendem umfassen: einen Bezeichner des Computerprogramms, einen Bezeichner eines Herstellers des Computerprogramms, einen Bezeichner eines Typs des Computerprogramms und einen mit einem Satz von Computerprogrammen verknüpften Bezeichner, wobei das Computerprogramm in dem Satz von Computerprogrammen enthalten ist.

2. Verfahren, umfassend:
Ausführen eines Computerprogramms, bei dem es sich um ein Spiel handelt;
gleichzeitig mit Ausführung des Computerprogramms, Empfangen von in einem Audio-Content-Signal eingebetteten Steuerinformationen, die mit Hilfe von Frequenzelementen, Audio-Fingerabdruck-Techniken oder Steganographie kodiert sind, welche bewirken, dass die kodierten Steuerinformationen für Menschen im Wesentlichen unhörbar sind,
Bestimmen, ob die Steuerinformationen mit einem Kriterium übereinstimmen, das durch das in der Vorrichtung laufende Computerprogramm definiert wird, wobei das Bestimmen umfasst, dass bestimmt wird, ob das Computerprogramm den Bezeichner speichert oder mit dem Bezeichner verknüpft ist, und
Mindestens teilweises Modifizieren der Ausführung des Computerprogramms in Abhängigkeit von der Bestimmung, wobei die Modifizierung umfasst, dass ein Satz verfügbarer Funktionalitäten im Computerprogramm modifiziert wird,
**dadurch gekennzeichnet, dass**:
die Steuerinformationen mindestens eines von Folgendem umfassen: einen Bezeichner des Computerprogramms, einen Bezeichner eines Herstellers des Computerprogramms, einen Bezeichner eines Typs des Computerprogramms und einen mit einem Satz von Computerprogrammen verknüpften Bezeichner, wobei das Computerprogramm in dem Satz von Computerprogrammen enthalten ist.

3. Verfahren nach Anspruch 2, wobei die Steuerinformationen kein Media-Content-Item bezeichnen, in dem das Audio-Content-Signal enthalten ist.

4. Verfahren nach Anspruch 2, wobei das Modifizieren des Satzes verfügbarer Funktionalitäten im Computerprogramm umfasst: Hinzufügen und/oder Entfernen von Menü-Optionen in einer Benutzeroberfläche des Computerprogramms.

5. Verfahren nach Anspruch 2, wobei das Modifizieren des Satzes verfügbarer Funktionalitäten im Computerprogramm umfasst: Freigeben und/oder Sperren von Merkmalen des Computerprogramms.

6. Verfahren nach Anspruch 2, wobei das Modifizieren des Satzes verfügbarer Funktionalitäten im Computerprogramm mindestens eines von Folgendem umfasst: Ermöglichen des Zugangs zu einem Bonus-Level, Ermöglichen der Verwendung eines Bonus-Items, Nachladen einer Spieler-Entität im Spiel und Ermöglichen der Verwendung eines Bonus-Fahrzeugs.

7. Verfahren nach einer der Ansprüche 2 bis 6, wobei das Bestimmen, ob die Steuerinformationen mit einem Kriterium übereinstimmen, das durch das Computerprogramm definiert ist, umfasst, dass überprüft wird, ob die Steuerinformationen ein gültiges kryptografisches Token umfassen.

8. Verfahren nach Anspruch 7, wobei das kryptografische Token eine kryptografische Signatur umfasst.

9. Computerprogramm, das Anweisungen umfasst, die, wenn durch einen Computer ausgeführt, den Computer dazu veranlassen, ein Verfahren gemäß einem der Ansprüche 2 bis 8 auszuführen.

## Revendications

1. Dispositif comprenant:
un moyen pour exécuter un programme informatique qui est un jeu;
un moyen pour recevoir, simultanément avec l'exécution du programme informatique, des informations de commande incorporées dans un signal à contenu audio encodées à l'aide d'éléments de fréquence, de techniques d'empreinte audio ou de stéganographie rendant les informations de commande encodées essentiellement inaudibles pour les humains;
un moyen pour déterminer si les informations de commande sont conformes à un critère défini par le programme informatique exécuté dans le dispositif, ladite détermination comprenant l'opération consistant à déterminer si le programme informatique stocke ou est associé à l'identifiant, et
un moyen pour modifier l'exécution du programme informatique en fonction de ladite détermination, ladite modification comprenant l'opération consistant à modifier un ensemble de fonctionnalités disponibles dans le programme informatique,
**caractérisé en ce que** les informations de commande comprennent au moins l'un parmi un identifiant du programme informatique, un identifiant d'un fabricant du programme informatique, un identifiant d'un type du programme informatique et un identifiant associé à un ensemble de programmes informatiques, ledit programme informatique étant compris dans ledit ensemble de programmes informatiques.

2. Procédé comprenant les étapes consistant à
exécuter un programme informatique qui est un jeu;
recevoir, simultanément avec l'exécution du programme informatique, des informations de commande incorporées dans un signal à contenu audio encodées à l'aide d'éléments de fréquence, de techniques d'empreinte audio ou de stéganographie rendant les informations de commande encodées essentiellement inaudibles pour les humains,
déterminer si les informations de commande sont conformes à un critère défini par le programme informatique exécuté dans le dispositif, ladite détermination comprenant l'opération consistant à déterminer si le programme informatique stocke ou est associé à l'identifiant, et
modifier l'exécution du programme informatique au moins partiellement en fonction de ladite détermination, ladite modification comprenant l'opération consistant à modifier un ensemble de fonctionnalités disponibles dans le programme informatique,
**caractérisé en ce que** :
les informations de commande comprennent au moins l'un parmi un identifiant du programme informatique, un identifiant d'un fabricant du programme informatique, un identifiant d'un type du programme informatique et un identifiant associé à un ensemble de programmes informatiques, ledit programme informatique étant compris dans ledit ensemble de programmes informatiques.

3. Procédé selon la revendication 2, dans lequel les informations de commande n'identifient pas un élément de contenu média dans lequel le signal de contenu audio est compris.

4. Procédé selon la revendication 2, dans lequel la modification de l'ensemble de fonctionnalités disponibles dans le programme informatique comprend au moins l'une des opérations consistant à ajouter et enlever des options de menu dans une interface utilisateur du programme informatique.

5. Procédé selon la revendication 2, dans lequel la modification de l'ensemble de fonctionnalités disponibles dans le programme informatique comprend au moins l'une des opérations consistant à activer et désactiver des caractéristiques du programme informatique.

6. Procédé selon la revendication 2, dans lequel la modification de l'ensemble de fonctionnalités disponibles dans le programme informatique comprend au moins l'une des opérations consistant à autoriser l'accès à un niveau bonus, autoriser l'utilisation d'un élément bonus, recharger une entité de joueur dans le jeu et autoriser l'utilisation d'un véhicule bonus.

7. Procédé selon l'une des revendications 2 à 6, dans lequel la détermination si les informations de commande sont conformes à un critère défini par le programme informatique comprend l'opération consistant à vérifier si les informations de commande comprennent un jeton cryptographique valable.

8. Procédé selon la revendication 7, dans lequel le jeton cryptographique comprend une signature cryptographique.

9. Programme informatique comprenant des instructions qui, lorsqu'elles sont exécutées par un ordinateur, amènent l'ordinateur à réaliser un procédé selon l'une des revendications 2 à 8.
